# EUROPÄISCHE PATENTSCHRIFT

(11) **EP 0 439 701 B1**
(45) Veröffentlichungstag und Bekanntmachung des Hinweises auf die Patenterteilung: **16.02.1994**
(21) Anmeldenummer: 90121449.4
(22) Anmeldetag: 09.11.1990
(51) Int. Cl.: B03B 9/06, B07B 9/00

(54) **Mehrstufiges Trennverfahren zum Sortieren und Aufbereiten von inhomogenem Baustellenmüll sowie Vorrichtung zur Durchführung des Verfahrens**
Multi-stage method of separation for sorting and processing inhomogeneous rubble and plant for carrying out the method
Procédé de séparation à plusieurs étapes pour le tri et le traitement des gravats non-homogènes et installation mettant en oeuvre le procédé

(30) Priorität: 31.01.1990 CH 305/90
(43) Veröffentlichungstag der Anmeldung: 07.08.1991
(73) Patentinhaber: FDC ENGINEERING AG, CH-8340 Hinwil (CH)
(72) Erfinder: Jung, Felix, CH-8630 Rüti (CH); Ernst, Eugen, CH-8640 Rapperswil (CH); Derungs, Giovanni, CH-8645 Jona (CH)
(74) Vertreter: Blöchle, Hans

(56) Entgegenhaltungen:
- EP-A- 0 173 934
- DE-A- 3 248 493
- DE-A- 3 422 148
- GB-A- 2 155 363
- US-A- 4 865 720
- MACHINE DESIGN. vol. 47, no. 4, 20 Februar 1975, CLEVELAND US Seite 18"Milwaukee to reclaim its solid waste"

## Beschreibung

Die Erfindung betrifft ein mehrstufiges Trennverfahren zum Sortieren und Aufbereiten von inhomogenem Baustellenmüll, welches darin besteht, dass a) der Baustellenmüll nach der zentralen Anlieferung zur Aussonderung einer Sperrmüllfraktion in gelockerter Schicht auf ein Sieb gefördert wird, dass b) eine kontinuierliche Aussonderung von magnetisierbaren Stoffen erfolgt, dass c) der Baustellenmüll zur Aussonderung einer Feinfraktion geführt wird und dass d) der Baustellenmüll zur Aussonderung einer leichten brennbaren Fraktion einem Luftstrom zugeführt wird.

Aus der Offenlegungsschrift DE-A1-3 248 493 ist ein Verfahren zum Rückgewinnen von Wertstoffen aus Mischschutt der Bauwirtschaft bekannt, bei dem der Mischschutt mittels einem Vorsieb in eine als grossstückigen Siebüberlauf und in eine als Siebdurchgang genannte Fraktion aufgetrennt wird. Bei einer ersten Handlesestation werden dem grossstückigen Siebüberlauf Holzteile entnommen. Der holzfreie Siebüberlauf passiert danach einen zweiten FE-Selektierer und gelangt in eine erste Siebtrommel, deren Grobfraktion mittels einem Windsichter in eine erste Leichtfraktion und in eine erste Schwerfraktion aufgeteilt wird, die bei einer zweiten Handlesestation in weitere Fraktionen aufgetrennt wird. Die als Siebdurchgang genannte Fraktion passiert einen ersten FE-Selektierer und wird anschliessend in eine zweite Siebtrommel geführt, deren Grobfraktion mittels einem Windsichter in eine erste Leichtfraktion und in eine erste Schwerfraktion aufgeteilt wird, die bei einer dritten Handlesestation in weitere Fraktionen aufgetrennt wird.

Der Nachteil dieser bekannten Sortieranlage liegt darin, dass das Leistungsvermögen solcher Anlagen nicht dem hohen Aufwand an Gebäuden und technischen Einrichtungen entspricht. Ein weiterer Nachteil liegt darin, dass das Sortieren noch weitgehend durch stückweises Lesen erfolgt, was ein grosser Personalaufwand und unqualifizierte Arbeit zur Folge hat.

Hier will die Erfindung Abhilfe schaffen. Die Erfindung, wie sie in den Ansprüchen gekennzeichnet ist, löst die Aufgabe, ein Verfahren sowie eine Vorrichtung zum Behandeln von inhomogenem Baustellenmüll anzugeben, bei dem und mit der die maschinelle Aussonderung der Müllkomponenten nach deren Grösse, nach deren Beschaffenheit und nach deren Wiederverwendung erfolgt.

Die durch die Erfindung erreichten Vorteile sind im wesentlichen darin zu sehen, dass zur Müllbeseitigung auf der Baustelle mehrere Müllkomponenten in einem gemeinsamen Müllbehälter gesammelt und abgeführt werden können, dass weniger Fahrten zur Müllabfuhr notwendig sind, dass der Bequemlichkeit der Verursacher Genüge getan wird, dass mit geringem Aufwand die Komponenten von ungleichartig zusammengesetztem Baustellenmüll einer zentralen Aufbereitung und Wiederverwendung zugeführt werden können, dass durch die Wiederverwendung der ausgesonderten Komponenten Ressourcen geschont werden, dass die ohnehin knapp gewordenen Deponien nicht belastet werden und dass mit der in Linie angeordneten Vorrichtung ein störungsfreies Trennverfahren gewährleistet wird.

Im folgenden wird die Erfindung anhand von lediglich einen Ausführungsweg darstellenden Zeichnungen näher erläutert. Es zeigen:
- Fig. 1: eine schematische Darstellung einer erfindungsgemässen Vorrichtung zum Behandeln von Baustellenmüll,
- Fig. 2: Einzelheiten eines Vorabscheiders mit konischen Siebleisten,
- Fig. 3: eine schematische Darstellung einer Vorrichtung zum Trennen von magnetisierbaren Stoffen,
- Fig. 4: Einzelheiten eines Fingersiebs mit Fingerdeck,
- Fig. 4a: einen Schnitt entlang der Linie I-I in der Fig. 4 durch ein Fingerdeck und
- Fig. 5: eine schematische Darstellung eines Windsichters.

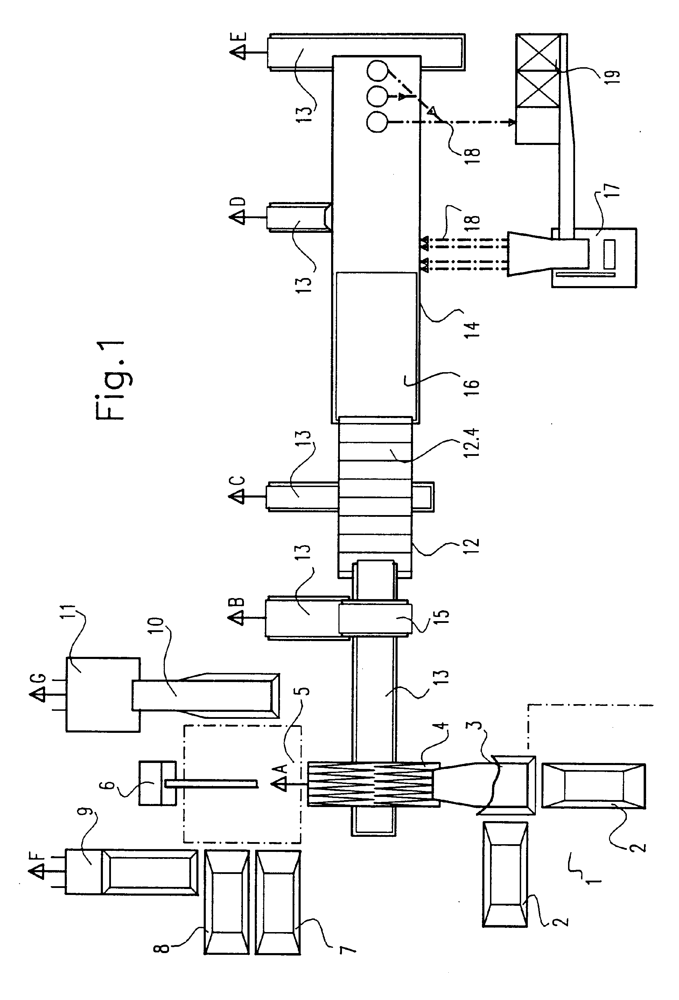

In den Fig. 1 bis 5 ist mit 1 eine Annahmestelle bezeichnet, an der die Anlieferung des Baustellenmülls mittels Müllbehältern 2 erfolgt. Der Inhalt der als Mulden ausgebildeten Müllbehälter 2 wird auf eine Vibrorinne 3 geschüttet. Damit die Müllschichtung der Behälter erhalten bleibt, erfolgt die Entleerung der Müllbehälter 2 üblicherweise in der Förderrichtung der Vibrorinne 3. Die in Vibrationen versetzte Vibrorinne 3 lockert den Baustellenmüll und fördert diesen auf einen durch die Vibrorinne 3 in Vibrationen versetzten Vorabscheider 4 mit in Förderrichtung konischen Siebleisten 4.1. Der Durchlass des Vorabscheiders 4 ist derart ausgelegt, dass sperrige Müllkomponenten vom übrigen Baustellenmüll getrennt werden, dabei ist eine an die Müllzusammensetzung anpassbare Durchlassweite vorgesehen. Die in der Förderrichtung Z verjüngten Siebleisten 4.1 sind beispielsweise so bemessen, dass eine mit A bezeichnete Sperrmüllfraktion mit einem Durchmesser von grösser als 150 mm ausgeschieden wird. Die Sperrmüllfraktion A wird auf einem Sortierplatz 5 mittels einem Manipulator 6 nach den Komponenten Metall, Brennbares, Baustoffe und Sondermüll sortiert. Zur Lagerung von Metall und Sondermüll stehen Müllbehälter 7 ; 8 bereit. Ein mit 9 bezeichneter Shredder verarbeitet die Komponente Holz in mit F bezeichnete Holzschnitzel, die zur Wärmeenergiegewinnung weiterverwendet werden. Die Komponente Baustoffe (Steine, Beton, Mörtel) gelangt über einen Förderer 10 zu einem Brecher 11, in dem sie zu einem wiederverwertbaren Baumaterial G aufbereitet wird. Nach dem Vorabscheider 4 erfolgt die Aussonderung der Müllfraktionen ohne Änderung der Förderrichtung. Mit der keiner Richtungsänderung unterliegenden Förderung des Baustellenmülls wird bezweckt, dass weder Staus noch übermässiger Verschleiss an Transport- und Fraktionseinrichtungen entstehen. Ein Transportband 13 fördert den vom Vorabscheider 4 nicht ausgesonderten Baustellenmüll an den Eingang eines Fingersiebs 12. Zwischen Vorabscheider 4 und Fingersieb 12 ist ein zur Trennung magnetisierbarer Stoffe B von nicht magnetisierbaren Stoffen vorgesehener Magnetabscheider 15 angeordnet. Das mit einem Fingerdeck 12.4 versehene Fingersieb 12 trennt vom übrigen Baustellenmüll eine Feinfraktion C ab, die aus wirtschaftlichen Gründen keine weitere Aufteilung erfährt und auf Halde geht. Die Körnung der Feinfraktion C wird von in Kaskade angeordneten, kammähnlichen Fingerleisten 12.1 des Fingerdecks 12.4 bestimmt und weist beispielsweise einen Durchmesser von kleiner als 12 mm auf. Der an den Eingang eines Windsichters 14 gelangende Baustellenmüll wird in einer Vorabscheidersektion 16 des Windsichters 14 durch mechanische Trennung in eine erste und in eine zweite Fraktion aufgeteilt. Der in Vibrationen versetzte Windsichter 14 fördert die erste Fraktion auf Eingangsniveau durch einen ersten Luftstrom, der eine mit E bezeichnete leichte Fraktion ausscheidet. Die vom ersten Luftstrom nicht ausgeschiedene Fraktion fällt auf das Niveau der in der Vorabscheidersektion 16 getrennten zweiten Fraktion. Beide Fraktionen werden durch einen zweiten Luftstrom geleitet, der die Ausscheidung der leichten Fraktion E fortsetzt. Die von den Luftströmen nicht erfasste Fraktion verlässt den Windsichter 14 als schwere Fraktion D über eine seitlich nach unten hin angeordnete Öffnung. Die vorwiegend aus Papier, Holz, Plastik und Textilien bestehende leichte Fraktion E wird zur Wärmeenergiegewinnung weiterverwendet, die nicht brennbare schwere Fraktion D lässt sich weiter in verschiedene Körnungen aufteilen und einer Wiederverwertung zuführen. Zur Erzeugung des ersten und zweiten Luftstromes ist ein Ventilator 17 vorgesehen. Strichpunktierte Linien mit Pfeilen symbolisieren Luftleitungen 18 mit den entsprechenden Luftströmungsrichtungen. Die im Windsichter 14 verwendete Luft wird am Ausgang abgesogen und zur Reinigung einem Filter 19 zugeführt. Der durch den Ventilator 17, den Windsichter 14, den Filter 19 und die Luftleitungen 18 gebildete, geschlossene Luftkreislauf verhindert weitgehend umweltbelastende Emissionen.

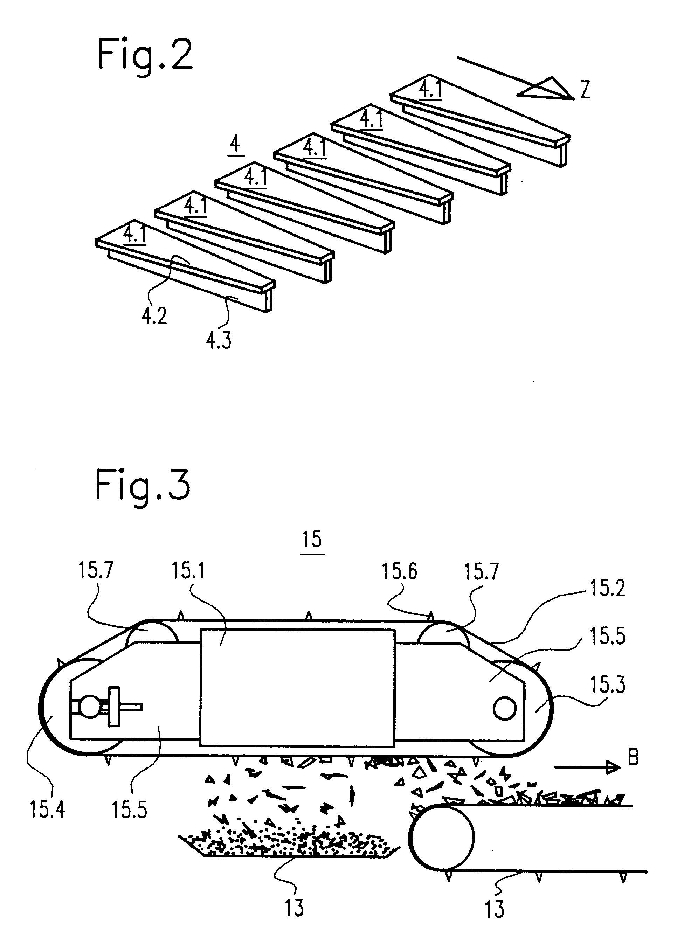

Fig. 2 zeigt den Aufbau und die Anordnung der im Vorabscheider 4 verwendeten Siebleisten 4.1. Jede Siebleiste 4.1 besteht aus einem in der Förderrichtung Z konisch verjüngten Oberteil 4.2, der auf seiner ganzen Länge durch eine vertikale Stütze 4.3 getragen wird. Mehrere nebeneinanderliegende Siebleisten 4.1 bilden ein Siebleistengitter. Im Ausführungsbeispiel der Fig. 1 sind zwei hintereinanderliegende Siebleistengitter vorgesehen.

In Fig. 3 ist ein quer zur Förderrichtung des Baustellenmülls angeordneter Magnetabscheider 15 dargestellt. Ein von einem Magnet 15.1 erzeugtes Magnetfeld wirkt auf die magnetisierbaren Stoffe B des Baustellenmülls, so dass diese durch die magnetische Kraft in Richtung des Magneten 15.1 bewegt werden. Eine Ansammlung von magnetisierbaren Stoffen B am Magnet 15.1 wird durch ein umlaufendes Band 15.2 verhindert. Das mit Mitnehmern 15.6 versehene Band 15.2 fördert die magnetisierbaren Stoffe B aus dem Magnetfeld, wo sie auf ein quer zur Förderrichtung des Baustellenmülls angeordnetes Transportband 13 fallen. Das Band 15.2 wird von einer Antriebstrommel 15.3 angetrieben und von einer einstellbaren Umlenktrommel 15.4 geführt. Magnet 15.1, Antriebstrommel 15.3, Umlenktrommel 15.4 sowie Stützrollen 15.7 werden je Seite von einem Träger 15.5 gehalten.

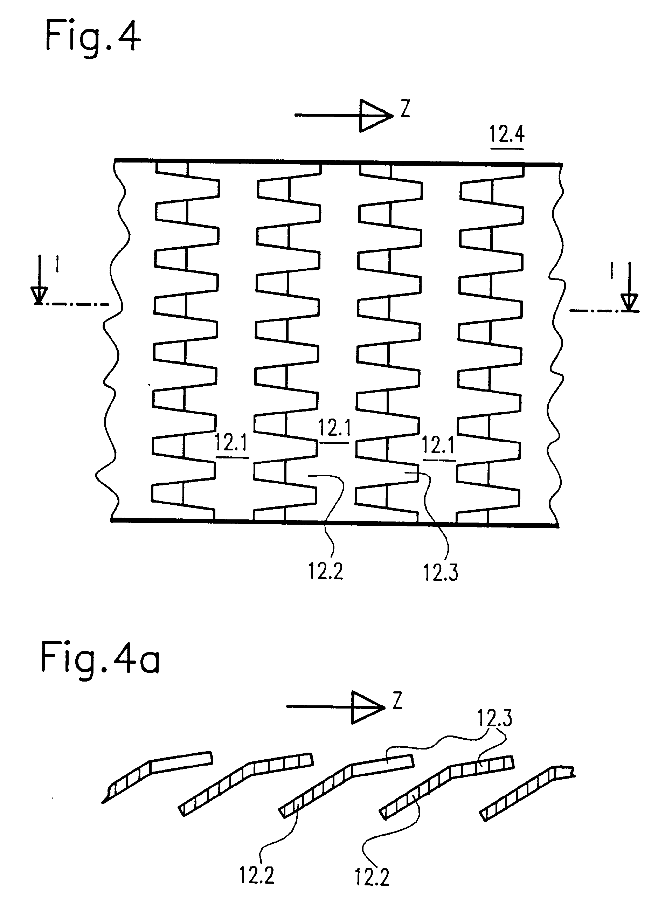

Der in Fig. 4 dargestellte Ausschnitt aus dem Fingerdeck 12.4 des Fingersiebs 12 zeigt die in Kaskade angeordneten Fingerleisten 12.1. Die quer zur Förderrichtung Z angeordneten Fingerleisten 12.1 weisen sich über die gesamte Breite des Fingersiebs 12 erstreckende Stege 12.2 auf. Die vordere Breitseite der Stege 12.2 ist mit in Förderrichtung weisenden, konischen Fingern 12.3 ausgestattet, die gegenüber den Fingern der nachfolgenden Fingerleiste um einen Fingerzwischenraum versetzt sind. Die Fingerleisten 12.1 sind derart angeordnet, dass die Finger 12.3 den nachfolgenden Steg 12.2 überlappen. Die in Vibrationen versetzten Fingerleisten 12.1 kämmen den Baustellenmüll, womit ein hoher Trenngrad erreicht wird. Zudem verhindern Fingerleisten 12.1 Materialflussstörungen durch sperrigen, verkeilten oder hängengebliebenen Baustellenmüll.

Der in Fig. 4a dargestellte Schnitt entlang der Linie I-I in der Fig. 4 zeigt die kaskadeartige Anordnung der Fingerleisten 12.1. Die leicht nach oben weisenden Finger 12.3 überlappen den nach unten geneigten Steg 12.2 der nachfolgenden Fingerleiste 12.1 teilweise.

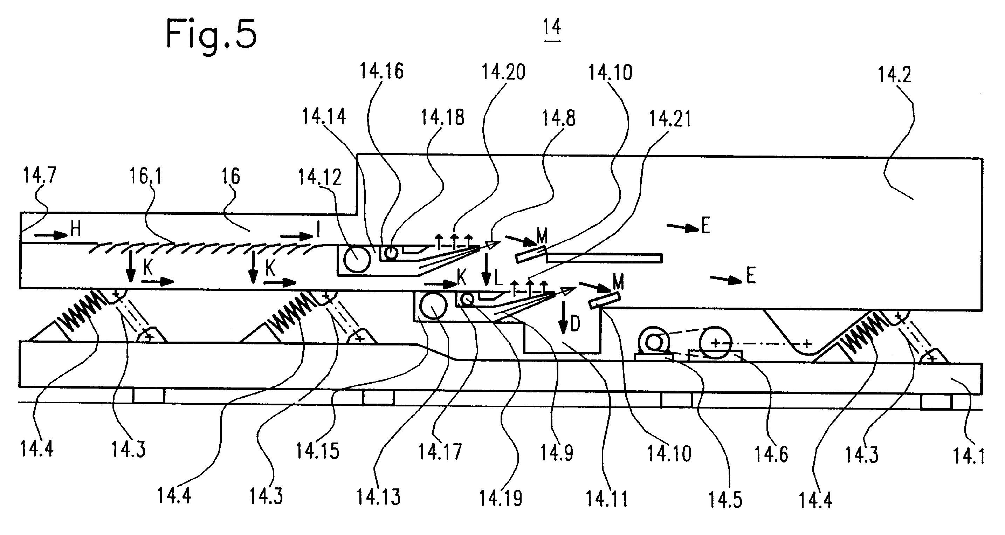

In Fig. 5 ist der Aufbau des im Verfahren verwendeten Windsichters 14 mit dem mit Pfeilen symbolisierten Materialfluss dargestellt. Im wesentlichen besteht der Windsichter 14 aus einer auf einem Sockel 14.1 beweglich gelagerten Wiege 14.2, die sich mittels Trägern 14.3 und Federelementen 14.4 auf dem Sockel 14.1 abstützt. Ein mit einem Antrieb 14.5 zusammenwirkender Vibrationserzeuger 14.6 versetzt die Wiege 14.2 in Vibrationen. Die vom Ventilator 17 verdichtete Luft gelangt über einen ersten und zweiten Einlass 14.12 ; 14.13 in Windkammern 14.14 ; 14.15 mit düsenartigen Auslassöffnungen, in denen der erste und zweite Luftstrom 14.8 ; 14.9 erzeugt wird. Ausserdem speist der Ventilator 17 über einen dritten und vierten Einlass 14.18 ; 14.19 zwei weitere Windkammern 14.16 ; 14.17 mit am Ende der Förderebenen flächig angeordneten Auslassöffnungen, aus denen ein dritter und vierter Luftstrom 14.20 ; 14.21 zur Vorlockerung des Baustellenmülls tritt. Zur Regulierung der Luftströme 14.8 ; 14.9 ; 14.20 ; 14.21 sind an den Einlässen 14.12 ; 14.13 ; 14.18 ; 14.19 nicht dargestellte Schieber vorgesehen. In der Regel sind der zweite und vierte Luftstrom 14.9 ; 14.21 schwächer als der erste und dritte Luftstrom 14.8 ; 14.20. Der vom Fingersieb 12 an den Eingang 14.7 des Windsichters 14 geförderte Baustellenmüll H wird in der Vorabscheidersektion 16 mittels einem Fingersieb 16.1 gemäss der in Fig. 4 ; 4a dargestellten Bauart in die erste Fraktion I und in die zweite Fraktion K aufgeteilt. Das Fingersieb 16.1 ist massgebend für die Körnung der Fraktion K, die beispielsweise auf einen Durchmesser von kleiner als 50 mm festgesetzt ist. Unter der Wirkung der Wiegenvibrationen gelangt die erste Fraktion I auf Eingangsniveau in den dritten und ersten Luftstrom 14.20 ; 14.8, die zweite Fraktion K hingegen fällt auf eine tiefer liegende Ebene und gelangt in den gegenüber dem ersten Luftstrom 14.8 in Förderichtung nach vorne versetzten vierten und zweiten Luftstrom 14.21 ; 14.9. Der erste Luftstrom 14.8 scheidet die leichte Fraktion E aus.

Eine mit M bezeichnete marginale Fraktion wird von einer verstellbaren Plattform 14.10 aufgefangen und fällt zusammen mit der nicht ausgeschiedenen Fraktion L auf die Ebene der zweiten Fraktion K. Im vierten und zweiten Luftstrom 14.21 ; 14.9 werden die zweite Fraktion K und die vom ersten Luftstrom nicht ausgeschiedenen Fraktionen L ; M nachbehandelt, indem die noch vorhandene leichte Fraktion E ausgeschieden wird. Die übrigen Fraktionen fallen nach unten und verlassen den Windsichter 14 über eine seitliche Öffnung 14.11 als schwere Fraktion D.

## Patentansprüche

1. Mehrstufiges Trennverfahren zum Sortieren und Aufbereiten von inhomogenem Baustellenmüll, welches darin besteht,
dass a) der Baustellenmüll nach der zentralen Anlieferung zur Aussonderung einer Sperrmüllfraktion (A) in gelockerter Schicht auf ein Sieb gefördert wird,
dass b) eine kontinuierliche Aussonderung von magnetisierbaren Stoffen (B) erfolgt,
dass c) der Baustellenmüll zur Aussonderung einer Feinfraktion (C) geführt wird und
dass d) der Baustellenmüll zur Aussonderung einer leichten brennbaren Fraktion (E) einem Luftstrom zugeführt wird,
dadurch gekennzeichnet,
dass bei Schritt a) der Baustellenmüll unter Anwendung einer durch Vibrationen erzeugten Vorschubkraft auf konische Siebleisten (4.1) gefördert wird,
dass bei Schritt c) die Förderung und Aussonderung der Feinfraktion (C) unter Anwendung einer durch Vibrationen erzeugten Vorschubkraft über Fingerleisten (12.1) in kaskadeartiger Anordnung geführt wird und dass bei Schritt d) der Baustellenmüll einem dritten und ersten Luftstrom (14.20 ; 14.8) und zur Nachbehandlung einem vierten und zweiten Luftstrom (14.21 ; 14.9) zugeführt wird.

2. Verfahren nach Anspruch 1,
dadurch gekennzeichnet,
dass die Sperrmüllfraktion (A) in die Komponenten Metall, Brennbares, Baustoffe und Sondermüll aufgeteilt und selektiv in eine weiterverwertbare Form aufbereitet wird.

3. Verfahren nach Anspruch 1,
dadurch gekennzeichnet,
dass die Gutgrösse der ausgesonderten Sperrmüllfraktion (A) je nach Müllzusammensetzung durch die konischen Siebleisten (4.1) bestimmt wird.

4. Verfahren nach Anspruch 1,
dadurch gekennzeichnet,
dass die Körnung der ausgesonderten Feinfraktion (C) je nach Müllzusammensetzung durch die Fingerleisten (12.1) bestimmt wird.

5. Vorrichtung zur Durchführung des Verfahrens nach Anspruch 1 bestehend aus
einem Sieb zur Aussonderung der Sperrmüllfraktion (A) aus dem angelieferten Baustellenmüll,
einem Magnetabscheider (15) zur kontinuierlichen Aussonderung der magnetisierbaren Stoffe (B),
und einem Windsichter (14) zur Aussonderung der leichten brennbaren Fraktion (E),
dadurch gekennzeichnet,
dass zur Förderung und Lockerung des angelieferten Baustellenmülls eine Vibrorinne (3) vorgesehen ist und das Sieb zur Aussonderung der Sperrmüllfraktion (A) ein an die Vibrorinne (3) anschliessender Vorabscheider (4) mit in Förderrichtung konischen Siebleisten (4.1) ist,
dass zur Aussonderung der Feinfraktion (C) ein Fingersieb (12) mit in Förderrichtung kaskadeartig versetzten Fingerleisten (12.1) vorgesehen ist und dass zur Aussonderung der leichten brennbaren Fraktion (E) der Windsichter (14) eine Vorabscheidersektion (16), einen dritten und ersten Luftstrom (14.20 ; 14.8), einen vierten und zweiten Luftstrom (14.21 ; 14.9) und einen geschlossenen Luftkreislauf aufweist.

6. Vorrichtung nach Anspruch 5,
dadurch gekennzeichnet,
dass Magnetabscheider (15), Fingersieb (12) und Windsichter (14) in Linie angeordnet sind.

7. Vorrichtung nach Anspruch 5,
dadurch gekennzeichnet,
dass Mittel (6; 9; 10; 11) zur Aufbereitung der Sperrmüllfraktion (A) vorgesehen sind.

8. Vorrichtung nach Anspruch 5,
dadurch gekennzeichnet,
dass der geschlossene Luftkreislauf aus einem Ventilator (17), Luftleitungen (18), Windkammern (14.14 ; 14.15) mit Düsen, Windkammern (14.16 ; 14.17) mit flächig angeordneten Auslassöffnungen und einem Filter (19) besteht.

## Claims

1. Multi-step separation method for the sorting and processing of inhomogeneous building site waste, which consists in that
a) the building site waste is after central delivery conveyed in loosened layer onto a screen for separation out of a bulky waste fraction (A),
b) a continuous separation out of magnetisable materials (B) is carried out,
c) the building site waste is conducted for the separation out of a fine fraction (C) and
d) the building site waste is fed to an air flow for the separation out of a readily combustible fraction (E),
characterised thereby that
in step a) the building site waste is conveyed to conical screening strips (4.1) with use of an advancing force produced by vibrations, in step c) the conveying and separation out of the fine fraction (C) is conducted with use of an advancing force, which is produced by vibrations, by way of finger strips (12.1) in cascade-like arrangement and
in step d) the building site waste is fed to a third and first air stream (14.20; 14.8) and, for subsequent treatment, to a fourth and second air stream (14.21; 14.9).

2. Method according to claim 1, characterised thereby that the bulky waste fraction (A) is divided up into the components metal, combustibles, building materials and special waste and selectively processed into a reusable form.

3. Method according to claim 1, characterised thereby that the material size of the separated out bulky waste fraction (A) is determined according to the respective waste composition by the conical screening strips (4.1).

4. Method according to claim 1, characterised thereby that the particle size of the separated out fine fraction is determined according to the respective waste composition by the finger strips (12.1).

5. Device for carrying out the method according to claim 1, consisting of a screen for the separation out of the bulky waste fraction (A) from the delivered building site waste, a magnet separator (15) for the continuous separation out of the magnetisable materials (B), and an air sifter (14) for the separation out of the readily combustible fraction (E), characterised thereby that a vibratory channel (3) is provided for the conveying and loosening of the delivered building site waste and the screen for the separation out of the bulky waste fraction (A) is a preliminary separator (4), which directly follows the vibratory channel (3), with screening strips (4.1) conical in conveying direction, that a finger screen (12) with finger strips (12.1) displaced cascade-like in conveying direction is provided for the separation out of the fine fraction (C) and that the air sifter (14) has for the separation out of the readily combustible fraction (E) a preliminary separator section (16), a third and first air stream (14.20; 14.8), a fourth and second air stream (14.21; 14.9) and a closed air circuit.

6. Device according to claim 5, characterised thereby that the magnet separator (15), finger screen (12) and air sifter (14) are arranged in a line.

7. Device according to claim 5, characterised thereby that means (6; 9; 10; 11) are provided for the processing of the bulky waste fraction (A).

8. Device according to claim 5, characterised thereby that the closed air circuit consists of a blower (17), air ducts (18), air chambers (14.14; 14.15) with nozzles, air chambers (14.16; 14.17) with areally arranged outlet openings and a filter (19).

## Revendications

1. Procédé de séparation à plusieurs étapes pour le tri et le traitement de gravats non homogènes, selon lequel
a) les gravats, après un approvisionnement central, sont amenés en couches aérées sur un crible en vue de la séparation d'une fraction de gravats volumineux (A),
b) une séparation continue de matières magnétisables (B) a lieu,
c) les gravats sont amenés vers une séparation d'une fraction fine (C), et
d) les gravats sont amenés vers un courant d'air en vue de la séparation d'une fraction combustible légère (E),
caractérisé en ce que, lors de la phase a), les gravats sont amenés, grâce à l'application d'une force d'avance produite par des vibrations, sur des barres de criblage coniques (4.1), en ce que, lors de la phase c), le transport et la séparation de la fraction fine (C) se fait par l'intermédiaire de barres à doigts (12.1) disposées en cascade, grâce à l'application d'une force d'avance produite par des vibrations, et en ce que, lors de la phase d), les gravats sont amenés vers un troisième et un premier courant d'air (14.20 ; 14.8) et, en vue d'un retraitement, vers un quatrième et un second courant d'air (14.21 ; 14.9).

2. Procédé selon la revendication 1, caractérisé en ce que la fraction de gravats volumineux (A) est répartie en composants en métal, en composants combustibles, en matériaux de construction et en gravats spéciaux, et transformés sélectivement en une forme recyclable.

3. Procédé selon la revendication 1, caractérisé en ce que la taille de la fraction de gravats volumineux (A) séparée est définie par les barres de criblage coniques (4.1) en fonction de la composition des gravats.

4. Procédé selon la revendication 1, caractérisé en ce que la granulométrie de la fraction fine (C) séparée est définie par les barres à doigts (12.1) en fonction de la composition des gravats.

5. Dispositif pour la mise en oeuvre du procédé selon la revendication 1, comprenant un crible pour la séparation de la fraction de gravats volumineux (A) à partir des gravats amenés, un séparateur magnétique (15) pour la séparation continue des matières magnétisables (B), et un séparateur à air (14) pour la séparation de la fraction combustible légère (E),
caractérisé en ce qu'il est prévu, pour transporter et aérer les gravats amenés, une goulotte vibrante (3), et le crible destiné à séparer la fraction de gravats volumineux (A) consiste en un séparateur préalable (4) faisant suite à la goulotte vibrante (3) et comportant des barres de criblage (4.1) coniques dans le sens de transport, en ce qu'il est prévu, pour la séparation de la fraction fine (C), un crible à doigts (12) comportant des barres à doigts (12.1) décalées en cascade dans le sens de transport, et en ce que, pour la séparation de la fraction combustible légère (E), le séparateur à air (14) comporte une section de séparateur préalable 16, un troisième et un premier courant d'air (14.20 ; 14.8), un quatrième et un second courant d'air (14.21 ; 14.9) et un circuit d'air fermé.

6. Dispositif selon la revendication 5, caractérisé en ce que le séparateur magnétique (15), le crible à doigts (12) et le séparateur à air (14) sont disposés en ligne.

7. Dispositif selon la revendication 5, caractérisé en ce qu'il est prévu des moyens (6 ; 9 ; 10 ; 11) pour traiter la fraction de gravats volumineux (A).

8. Dispositif selon la revendication 5, caractérisé en ce que le circuit d'air fermé se compose d'un ventilateur (17), de conduites d'air (18), de chambres à air (14.14 ; 14.15) pourvues de buses, de chambres à air (14.16 ; 14.17) pourvues d'ouvertures de sortie disposées de manière plane, et d'un filtre (19).
